(19) Europäisches Patentamt
European Patent Office
Office européen des brevets

(11) Publication number: **0 087 621**
**B1**

(12) **EUROPEAN PATENT SPECIFICATION**

(45) Date of publication of patent specification: **28.09.88**

(51) Int. Cl.$^4$: **G 01 F 5/00**

(21) Application number: **83101186.1**

(22) Date of filing: **08.02.83**

(54) **Air flow meter for internal-combustion engine.**

(30) Priority: **08.02.82 JP 17511/82**

(43) Date of publication of application:
**07.09.83 Bulletin 83/36**

(45) Publication of the grant of the patent:
**28.09.88 Bulletin 88/39**

(84) Designated Contracting States:
**DE FR GB**

(56) References cited:
**DE-A-2 914 275**
**US-A-3 747 577**
**US-A-3 750 632**
**US-A-4 264 961**

(73) Proprietor: **Hitachi, Ltd.**
**5-1, Marunouchi 1-chome**
**Chiyoda-ku Tokyo 100 (JP)**

(72) Inventor: **Sato, Kanemasa**
**1450-17, Tarazaki**
**Katsuta-shi Ibaraki-ken (JP)**
Inventor: **Ueno, Sadayasu**
**847-33, Ichige**
**Katsuta-shi Ibaraki-ken (JP)**
Inventor: **Oyama, Yoshishige**
**3-24-18, Higashioshima**
**Katsuta-shi Ibaraki-ken (JP)**
Inventor: **Nishimura, Yutaka**
**Yorii Apt.348 391-2, Tabiko**
**Katsuta-shi Ibaraki-ken (JP)**

(74) Representative: **Patentanwälte Beetz sen. - Beetz jun. Timpe - Siegfried - Schmitt-Fumian**
**Steinsdorfstrasse 10**
**D-8000 München 22 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 087 621 B1**

## Description

The invention relates to an air flow meter according to the first portion of claim 1 for measuring the flow rate of intake air supplied to an internal-combustion engine of an automobile or the like.

There are several known methods for measuring the flow rate of intake air supplied to an internal-combustion engine. Among them, heat-sensitive air flow meters, such as hot-wire air flow meters, are widely employed, since they are generally excellent in responsiveness and capable of measuring the mass flow rate. Such heat-sensitive air flow meters are known from US—A—3,747,577, US—A—3,750,632 and US—A—3,824,966. These known heat sensitive air flow meters are arranged such that as a flow rate sensing part of platinum wire with a diameter of from 70 µm to 100 µm is stretched inside an intake pipe. This arrangement, however, is insecure in durability and easily mechanically damaged by a backfire occurring particularly when the internal-combustion engine is in a bad condition.

In order to cope with these disadvantages it is known from the US—A—4,264,961 that a part of the air passing through an intake pipe is introduced into a bypass pipe, in which a platinum wire is mounted. However, such a by-pass pipe type air flow meter has a binary problem. The binary problem is a phenomenon that a heat-sensitive air flow meter indicates the same output value although the flow rates of intake air are different from each other.

This binary problem arises in the full-load operation range of an internal-combustion engine.

In the EP—A—0082484 (publication date 29.06.1983) is disclosed an air flow meter for the suction system of an internal-combustion engine having a flow rate detector disposed in a by-pass passage. The by-pass passage communicates with a pressure-accumulating chamber, in which the pressure of the backward gas flow will be stored. This pressure serves as a flowing resistance with respect to the airflow in the by-pass passage during the succeeding forward air flow condition.

An air flow meter assembly according to the EP—A—0054887 (publication date 30.06.1982) belongs to the prior art in which a hot wire element is disposed in a by-pass air passage. The by-pass air passage is provided to prolong a distance of length between the inlet opening of the by-pass passage and the hot-wire, thereby to settle the flow of air in the by-pass passage at least in the area around the hot-wire. The inlet opening of the by-pass air passage may open in a plane perpendicular to the axis of the venturi portion and within the area of upper projection of the venturi portion, to prevent carbon and oil particles from coming into the by-pass passage thereby to prevent the contamination of the hot-wire.

From the DE—A—29 14 275 it is known an air flow meter according to the first portion of claim 1 comprising a venturi in the manifold on the upstream side of the throttle flap and an air flow sensor element of the thermosensitive type, which is disposed in a by-pass air passage. The inlet opening of a first straight portion of the by-pass passage directed in parallel to the venturi of the main passage is disposed on the upstream side of the venturi. The straight passage portion is connected with a second portion of the by-pass passage formed as a ring channel in the body of the main passage and having at least one outlet opening formed as a slot and disposed in the smallest area of the venturi.

In this air flow meter the whole length of the by-pass passage is not exactly fixed, since the air flows out through the outlet slot extending over a substantial portion of the circumference of the venturi. For this reason also by this type of air flow meter it exists the binary problem.

The object of the invention is to provide a by-pass type air flow meter according to the preamble of claim 1 which has no binary problem.

The solution of this object is defined by the characterizing features of claim 1.

Description of the drawings:

Fig. 1 is a characteristic graph showing the relationship between the manifold pressure and the output voltage in a conventional heat-sensitive air flow meter;

Fig. 2 is a chart schematically showing the relationship between the manifold pressure and the output voltage in the air flow meter shown in Fig. 1;

Figs. 3 and 4 illustrate problems of the prior art, respectively;

Figs. 5 to 9 illustrate the principle of the present invention, respectively;

Fig. 10 is a partly sectioned side elevational view of a preferred embodiment of the invention;

Fig. 11 is a partly sectioned plan view of the embodiment shown in Fig. 10;

Fig. 12 illustrates the flow rate of the air in a by-pass passage in a blow-back state;

Fig. 13 is a plan view of a further preferred embodiment of the invention; and

Fig. 14 is a partly sectioned side elevational view of the embodiment shown in Fig. 13.

Description of the preferred embodiments:

Fig. 1 is a graph illustrating the relationship between the manifold pressure and the flow sensing signal (output voltage) in a conventional heat-sensitive air flow meter for internal-combustion engines. The manifold pressure represented by the horizontal axis substantially corresponds to the throttle opening. Consequently, the higher the manifold pressure (as it goes rightwards as viewed in Fig. 1), the larger the throttle opening. Moreover, curves in Fig. 1 show characteristics at constant engine speeds, respectively: the curve A at 1000 RPM; the curve B at 1200 RPM; the curve C at 1400 RPM; the curve D at 1600 RPM; the curve E at 1800 RPM; the curve F at 2000 RPM; the curve G at 2400 RPM; the curve H at 2800 RPM; the curve

I at 3200 RPM; the curve J at 3600 RPM; the curve K at 4000 RPM; the curve L at 4400 RPM; and the curve M at 4800 RPM.

In Fig. 1, the characteristic curves have a tendency to droop in the shape of the elephant trunk in the regions close to the totally open state of the throttle, particularly at low speed, from 1000 RPM to 2000 RPM and at high speed, above 4000 RPM. Consequently, there is a binary problem that the values of output (V) of the flow sensing signal are the same although manifold pressures, i.e., intake air flow rates are different from each other.

Such a binary problem leads the intake air flow rate sensing signal to have a large error, so that it becomes impossible to effect an accurate engine control.

Fig. 2 is a chart schematically illustrating one of characteristics showing the relationship between the manifold pressure and the air flow in the heat-sensitive air flow meter shown in Fig. 1. As the throttle opening becomes larger and the manifold pressure becomes higher, intake pulsations are generated. The zone A shown by an arrow includes regions where intake pulsations are noticeably generated, while the zone B shown by an arrow includes regions where blow-back takes place particularly remarkably in the intake pulsation regions. Assuming that the straight line shown by a solid line is a real air flow line, the air flow obtained from the output of a heat-sensitive probe shows a characteristic illustrated by a series of circles. In the zone A, the output signal of the heat-sensitive probe showing the air flow lowers, causing an error to become larger. Moreover, in the zone B, being affected by the blow-back, the output signal becomes larger than the real value, leading to a positive error.

The relationship between the air flow and the output signal is nonlinear as shown by a solid line in Fig. 3. Therefore, in the case where the air flow passing through the air flow meter is a pulsating flow as shown by a solid line A, the output signal of the flow meter varies as shown by a solid line B. Consequently, when the output signal is averaged per period of the pulsation and an air flow $Q_1$ is obtained from the averaged signal $V_1$, the air flow $Q_1$ is smaller than an average value $Q_2$ of the real air flow. As a result, the relationship between the real air flow and the air flow (measured value) obtained from the above-mentioned averaged value in case of varying the intake pipe pressure under a condition of a constant engine speed is such as shown in Fig. 2. Namely, in engine operation regions where the intake pulsation has a large pulsation amplitude, measured values become smaller than real air flows, leading to large measuring errors. Moreover, the result obtained by means of a computer simulation is shown in Fig. 4 with the amplitude ratio of pulsation represented by the horizontal axis.

If the average air flow rate is denoted by $U_0$, while the amplitude ratio of the pulsating flow is designated by A, the flow rate U of the pulsating air flow is represented by the following formula:

$$U=U_0(1+A \cdot \sin \omega t) \quad (1)$$

The amplitude ratio A means the proportion of the amplitude of the pulsation to the average value $U_0$.

In Fig. 4, the horizontal axis represents the amplitude ratio A of the pulsating flow. When the amplitude ratio A is 1, the amplitude is maximum and equal to $U_0$. On the other hand, the vertical axis represents the ratio between a real air flow and a value measured by the flow meter. When the ratio is 0 the real air flow and the measured value coincide with each other. It will be understood that the larger the amplitude ratio A of pulsation, the smaller the measured value than the real value, causing a measuring error to enlarge.

Fig. 5 illustrates the principle of a heat-sensitive air flow meter according to the invention, which is schematically shown in order to facilitate theoretical calculation. A heat-sensitive probe 4 is disposed in a by-pass passage 5 formed in a throttle body 1 and having an inlet 6 provided on the upstream side of a Venturi part 3 in a main intake passage 2 and an outlet 8 provided at the Venturi part 3. Now if the pressure at the inlet 6 is denoted by $p_1$, while the pressure at the outlet 8 is designated by $p_2$, the pressure difference $p_1-p_2$ produced when intake pulsation is generated is represented by the following formula:

$$p_1-p_2=L \cdot \rho \frac{du_2}{dt} + \varepsilon \cdot \rho \frac{U_2^2}{2} + \{1-(\frac{A_2}{A_1})\}\rho \cdot u_2^2 \quad (2)$$

where L is the length between two planes perpendicular to the air flow in the main passage 2, one of which includes the inlet 6 of the by-pass passage 5 and the other includes the center of the outlet 8 thereof.

$\rho$ is the air density;

$\varepsilon$ is a frictional loss coefficient;

$A_1$ is the sectional area of the main intake passage at the Venturi part 3;

$A_2$ is the sectional area of the by-pass passage 5; and

$u_2$ is the air flow rate in the main intake passage at a section 8.

On the other hand, the air flow rate w in the by-pass passage resulting from the pressure difference $p_1-p_2$ is represented by the following formula:

$$p_1-p_2=l \cdot \rho \frac{dw}{dt} + \varepsilon \cdot \rho \frac{W^2}{2} \quad (3)$$

where l is the length of the by-pass passage. It is to be noted that the first term on the right side of each of the above formulae (2), (3) represents the inertia of the air flow.

Fig. 6 is a chart showing the calculation results of the air flow rate w in the by-pass passage in case of sinusoidally varying the air flow rate $u_2$ in the main intake passage at the outlet 8 of the by-pass passage. In other words, the amplitude of w shown by a solid line is decreased as compared with that of $u_2$ shown by a broken line because of an inertial lag effect. In addition, owing to a Venturi effect between the main intake passage at sections 6 and 8 in Fig. 5, i.e., the relationship shown by $p_1 \propto p_2 \propto u_2^2$, the average value $\overline{w}$ tends to become larger than $\overline{u}_2$.

Fig. 7 shows this with respect to the amplitude ratio A of pulsation by means of computer simulation, similarly to Fig. 4. The larger the amplitude ratio A of pulsation, and the larger the length l of the by-pass passage, the larger the by-pass passage average air flow rate than the main passage average air flow rate. In this case, the length L of the main passage is 30 mm.

Fig. 8 is a chart showing a characteristic obtained by means of the by-pass passage shown in Fig. 5, where the horizontal axis represents values of l/L, while the vertical axis represents values of $\overline{w}/\overline{u}_2$. In other words, by properly selecting l/L, it becomes possible to cancel the decrease in the flow meter output in the regions in the zone A of Fig. 2 where intake pulsation is noticeably generated, by the increase in the average flow rate in the by-pass passage due to the inertial lag effect.

Fig. 9 shows the output error with respect to the ratio of the by-pass passage length l to the main passage length L, l/L, when the internal-combustion engine is operated at 1000 RPM with the throttle totally open. It will be apparent from Fig. 9 that the error becomes small so that it can be practically neglected if the ratio of the by-pass passage length to the main passage length between the branching part and the combining part is 3 or more.

In other words, when the ratio is 3, the error is −5%, and such a small error will not cause a binary problem although the measured value is smaller than the actual air flow as shown by a dash and dotted line in Fig. 2. When the ratio is 5 or more, the error becomes positive. However, a positive error will not cause a binary problem, since in such a case the measured value is larger than the actual air flow. It is to be noted that the measured value becomes larger than the actual air flow in the blow-back regions in the zone B in Fig. 2, as shown by a dash and dotted line, since the effect obtained by lengthening the by-pass passage is small in such regions.

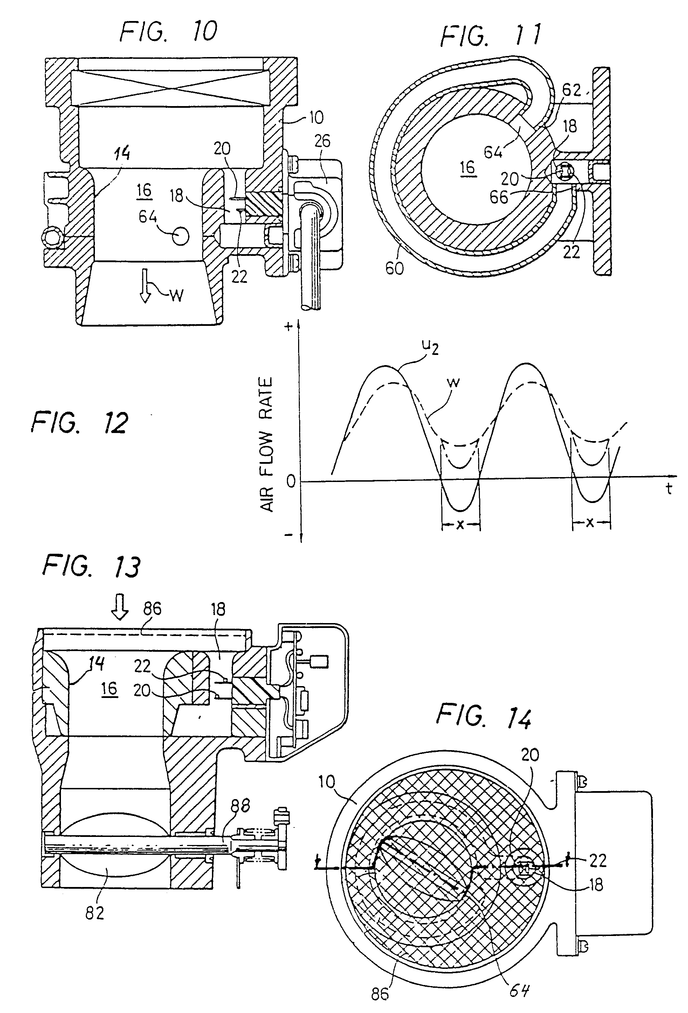

Referring to Figs. 10 and 11 showing a preferred embodiment of the invention respectively, the parallel by-pass passage 18 is formed inside the side wall part of the main passage 16 so as to be parallel thereto. A pipe 60 forming an outer peripheral by-pass passage is connected to the lower end of the parallel by-pass passage 18. An outlet end 62 of the pipe 60 is connected to an opening 64 opened in the side wall of the main passage 16. In other words, an inlet end 66 of the pipe 60 is connected to the lower end of the parallel by-pass passage 18, and the pipe 60 is disposed so as to surround substantially all the periphery of the side wall part of the main passage 16 as well as combine with the main passage 16 again through the outlet end 62. In this embodiment, the the outer peripheral by-pass passage is formed by the pipe 60 mounted on the outside of the main passage side wall part.

A part of the intake air flowing in through the air cleaner is made to branch off and flow in from the inlet end of the parallel by-pass passage 18 and passed through the heat-sensitive resistors 20, 22 before flowing into the pipe 60 forming the outer peripheral by-pass passage. After travelling round substantially all the periphery of the main passage 16, the part of the intake air reenters the main passage 16 from the opening 64.

According to the above-described embodiment, it is possible to enlarge the inertia of the intake air flow in the by-pass passage, since the outer peripheral by-pass passage is connected to the downstream end of the parallel by-pass passage 18 parallel to the main passage 16 for lengthening the length of the by-pass passage. Therefore, even when intake pulsation is generated by the engine operation, it is possible to decrease the amplitude of the pulsation in the by-pass passage, thereby making it possible to maintain the state of flow relatively close to the steady flow. Thus, since the intake air flow in the by-pass passage, i.e., the flow in the passage where the heat-sensitive resistor 20 is disposed is made close to the stationary state, thereby allowing the pulsation to be smaller, it is possible to decrease the responsive lag effect of the sensing signal representative of the flow sensed by the heat-sensitive resistor 20. Accordingly, it is possible to resolve the binary problem due to the above-mentioned responsive lag (particularly the responsive lag in rising), i.e., the binary problem based on that only an average flow lower than the actual flow can be sensed owing to the fact that the responsive lag becomes larger in rising although there is a small responsive lag in decaying.

Moreover, according to the above-described embodiment, since the outer peripheral by-pass passage 60 is provided at the portion surrounding the main passage 16, all of the by-pass passage can be housed within the range of the heat-sensitive flow meter. Accordingly, it is possible to obtain a heat-sensitive flow meter for internal-combustion engines with a simple and compact structure and having no binary problem.

In addition, in the case of forming the by-pass passage by the by-pass passage parallel to the main passage and the by-pass passage formed on the outer periphery of the main passage as shown in the above-described embodiment, the length of the by-pass passage can be made substantially three or more times longer than that of the main passage by making the length of the outer peripheral by-pass passage two or more times longer than that of the parallel by-pass passage.

As will be apparent from the above description, according to the embodiment of the invention, the binary problem arising when pulsation is generated is resolved, and the characteristic such as shown by the dash and dotted line in Fig. 2 can be obtained. However, the measured value is larger than the actual flow in the blow-back regions in the zone B as shown by the dash and dotted line in Fig. 2.

Fig. 12 is a chart showing the air flow rate in the by-pass passage measured when blow-back takes place. A curve $u_2$ shown by a solid line represents the intake air flow rate in the main passage at the outlet of the by-pass passage, while a curve w shown by a broken line represents the air flow rate in the by-pass passage 18. In a region x where a back flow is produced when blow-back occurs, even when the main passage air flow rate $u_2$ is negative, the air flow rate w in the by-pass passage having an enlarged l/L is positive. Therefore, if such a method is employed that the waveform of w shown by the broken line is held from being positive as much as possible by applying the dynamic pressure of the back flow of the main passage air to the outlet of the by-pass passage in the regions x, the air flow rate in the by-pass passage approachs zero, so that it is possible to obtain a characteristic such as shown by a dash and dotted line. Thus, the dash and dotted line in the zone B in Fig. 2 further approaches ideal values shown by the solid line, thereby allowing the air flow rate error to be decreased.

Figs. 13 and 14 show a further preferred embodiment of the invention respectively. Fig. 13 is a plan view, while Fig. 14 is a partly sectioned side elevational view of the embodiment shown in Fig. 13. In this embodiment, a heat-sensitive air flow meter and a throttle valve 82 are formed into a unitary structure. According to this arrangement, the ratio between the air flow rates in the main and by-pass air passages 16, 18 is easily affected by the throttle valve opening. It is desirable for coping with this disadvantage to allow the direction of the by-pass passage outlet 64 to coincide with the axial direction of a throttle valve shaft 88.

Moreover, a wire mesh 86 for preventing the entry of dust is provided on the upstream side of the main air passage 16 and the by-pass air passage 18. In a by-pass type flow meter, the length of the resistors 20, 22 is obliged to be short, since the diameter of the by-pass air passage 18 is smaller than that of the main air passage 16. Further, if the inlet of the by-pass air passage 18 is opened in the direction of the air flow as illustrated, when, for example, a part of elements of the air cleaner peels off, it easily enters the by-pass air passage and may cover a part of the resistors 20, 22. Since the length of the resistors 20, 22 is short as mentioned above, even if only a part thereof is covered, there will be a large change in the signal obtained therefrom. Therefore, the flow meter with such an arrangement as illustrated needs at the inlet thereof the wire mesh for preventing the entry of dust. Although the mesh of the wire mesh should be as small as possible from the viewpoint of prevention of the entry of dust, as the mesh is made smaller, the breathing resistance undesirably becomes larger. Therefore, a required mesh is about the length of the resistor 20, and a mesh of from 0.5 to 2 mm is preferable.

As the electric circuit it is possible to employ such a bridge circuit as mentioned in US—A—3,747,577.

## Claims

1. Air flow meter for a suction system of an internal combustion engine having:

a main passage (16) provided between an air cleaner and the internal combustion engine;

a Venturi (14) provided in the main passage (16) on the upstream side of a throttle valve (83);

a by-pass passage (18) having an inlet opening to the main passage (16) disposed on the upstream side with respect to the Venturi (14) and an outlet (64) to the Venturi (14); and

an air flow sensor (20, 22) provided in the by-pass passage (18), characterized in

(a)—that the width of the outlet opening of the by-pass passage (18) in the circumferential direction is very small in comparison to the inner circumference of the main passage (16);

(b)—that the direction of the outlet (64) and the direction of the shaft (88) of the throttle valve (83) coincide with each other, and

(c)—that the ratio l/L of the length (l) of the by-pass passage (18) to the length L of a part of the main passage (16) is substantially 3 or more, wherein the length L is the distance between two planes crossing the main passage (16) perpendicularly to the flow direction, one of which including the inlet opening and the other including the center of the outlet opening of the by-pass passage (18).

2. Air flow meter as defined in claim 1, characterized in that the by-pass passage (18) includes a straight portion parallel to the main passage (16) and a curved portion (60) formed on the outer periphery of the main passage (16).

3. Air flow meter as defined in claim 2, characterized in that the by-pass passage (18) is formed in the wall of a body (10) constituting the main passage (16) and that the outlet (64) is a slot.

4. Air flow meter as defined in claim 3, characterized in that the body constituting the main passage (16) is composed of at least two members (10, 12), one (10) of said two members having therein a portion of the main passage (16) and the straight portion of the by-pass passage (18), the other having the rest of the main passage (16), at least one (10) of said two members (10, 12) having a groove formed around the outer periphery of the main passage (16), so that by connecting the two members the curved portion of the by-pass passage (18) will be formed at the connection of the two members.

5. Air flow meter as defined in claim 2, characterized in that the curved portion of the by-pass passage (18) is formed by a pipe (60), the outlet (64) of which is in the member constituting the main passage (16).

6. Air flow meter as defined in claim 1, characterized in that the by-pass passage (18) is adapted to take in the air flowing in through the air cleaner by a dynamic pressure.

7. Air flow meter as defined in claim 1, characterized in that the by-pass passage (18) is adapted to take in the air flowing in through the air cleaner by a static pressure.

8. Air flow meter as defined in claim 1, characterized in that a member for preventing the entry of dust is provided on the upstream side of the inlet opening of the by-pass passage (18).

9. Air flow meter as defined in claim 2, characterized in that the length of the curved portion is two or more times longer than that of the straight portion of the by-pass passage (18) and in that the air flow sensor (20) is provided in the straight portion.

**Patentansprüche**

1. Luftdurchflußmengenmesser für ein Ausaugsystem einer Brennkraftmaschine mit:
einer zwischen einem Luftfilter und der Brennkraftmaschine liegenden Hauptleitung (16);
einem in der Hauptleitung (16) aufstrom von einer Drosselklappe (83) befindlichen Lufttrichter (14);
einer Bypassleitung (18), die eine Einlaßöffnung zur Hauptleitung (16) in der Aufstromseite des Lufttrichters (14) und einen Auslaß (64) zum Lufttrichter (14) aufweist; und
einem Luftdurchsatzmengenfühler (20, 22) in der Bypassleitung (18), dadurch gekennzeichnet,
(a) daß die Weite der Auslaßöffnung der Bypassleitung (18) in Umfangsrichtung sehr klein ist im Vergleich zum Innenumfang der Hauptleitung (16);
(b) daß die Richtung des Auslasses (64) und die Richtung der Welle (88) der Drosselklappe (83) übereinstimmen, und
(c) daß das Verhältnis l/L der Länge (l) der Bypassleitung (18) zur Länge L eines Teils der Hauptleitung (16) im wesentlichen 3 oder mehr beträgt, wobei die Länge L der Abstand zwischen zwei die Hauptleitung (16) senkrecht zur Strömungsrichtung kreuzenden Ebenen ist, wobei die eine Ebene die Einlaßöffnung und die andere Ebene die Mitte der Auslaßöffnung der Bypassleitung (18) einschließt.

2. Luftdurchflußmengenmesser nach Anspruch 1, dadurch gekennzeichnet, daß die Bypassleitung (18) einen zur Hauptleitung (16) parallelen geraden Abschnitt und einen am Außenumfang der Hauptleitung (16) gebildeten gekrümmten Abschnitt (60) aufweist.

3. Luftdurchflußmengenmesser nach Anspruch 2, dadurch gekennzeichnet, daß die Bypassleitung (18) in der Wand eines die Hauptleitung (16) bildenden Körpers (10) gebildet und daß der Auslaß (64) ein Schlitz ist.

4. Luftdurchflußmengenmesser nach Anspruch 3, dadurch gekennzeichnet, daß der die Hauptleitung (16) bildende Körper aus wenigstens zwei Teilen (10, 12) besteht, wobei in dem einen Teil (10) ein Abschnitt der Hauptleitung (16) und der gerade Abschnitt der Bypassleitung (18) und in dem anderen Teil die restliche Hauptleitung (16) vorgesehen sind, wobei wenigstens einer (10) der beiden Teile (10, 12) eine um den Außenumfang der Hauptleitung (16) verlaufende Nut aufweist, so daß durch Verbinden der beiden Teile der gekrümmte Abschnitt der Bypassleitung (18) an der Verbindungsstelle zwischen den beiden Teilen gebildet ist.

5. Luftdurchflußmengenmesser nach Anspruch 2, dadurch gekennzeichnet, daß der gekrümmte Abschnitt der Bypassleitung (18) durch ein Rohr (60) gebildet ist, dessen Auslaß (64) sich in dem die Hauptleitung (16) bildenden Teil befindet.

6. Luftdurchflußmengenmesser nach Anspruch 1, dadurch gekennzeichnet, daß die Bypassleitung (18) so ausgebildet ist, daß sie die durch den Luftfilter einströmende Luft durch dynamischen Druck ansaugt.

7. Luftdurchflußmengenmesser nach Anspruch 1, dadurch gekennzeichnet, daß die Bypassleitung (18) so ausgebildet ist, daß sie die durch den Luftfilter einströmende Luft durch statischen Druck ansaugt.

8. Luftdurchflußmengenmesser nach Anspruch 1, dadurch gekennzeichnet, daß ein Element, das den Eintritt von Staub hemmt, aufstrom von der Einlaßöffnung der Bypassleitung (18) vorgesehen ist.

9. Luftdurchflußmengenmesser nach Anspruch 2, dadurch gekennzeichnet, daß die Länge des gekrümmten Abschnitts zwei- oder mehrfach länger als diejenige des geraden Abschnitts der Bypassleitung (18) und daß der Luftdurchflußmengenfühler (20) im geraden Abschnitt angeordnet ist.

**Revendications**

1. Débitmètre d'air pour un système d'aspiration d'un moteur à combustion interne comportant:
un passage principal (16) disposé entre un filtre à air et le moteur à combustion interne;
un venturi (14) prévu dans le passage principal (16) sur le côté amont d'un papillon des gaz (83);
un passage de dérivation (18) possédant une ouverture d'admission débouchant dans le passage principal (16) et située sur le côte amont par rapport au venturi (14), et une sortie (64) débouchant dans le venturi (14); et
un capteur (20, 22) du débit d'air, disposé dans le passage de dérivation (18), caractérisé en ce que
(a)—la largeur de l'ouverture de sortie du passage de dérivation (18) dans la direction circonférentielle est très faible par rapport à la circonférence intérieure du passage principal (16);
(b)—la direction de la sortie (64) et la direction de l'arbre (88) du papillon des gaz (83) coïncident entre elles, et

(c)—le rapport l/L de la longueur (l) du passage de dérivation (18) à la longueur L d'une partie du passage principal (16) est égal sensiblement à 3 ou plus, la longueur L étant la distance entre deux plans recoupant le passage principal (16) perpendiculairement à la direction d'écoulement, l'un de ces plans incluant l'ouverture d'entrée et l'autre incluant le centre de l'ouverture de sortie du passage de dérivation (18).

2. Débitmètre d'air selon la revendication 1, caractérisé en ce que le passage de dérivation (18) comporte une partie rectiligne parallèle au passage principal (16) et une partie courbe (60) formée sur le pourtour extérieur du passage principal (16).

3. Débitmètre d'air selon la revendication 2, caractérisé en ce que le passage de dérivation (18) est formé dans la paroi d'un corps (10) constituant le passage principal (16) et que la sortie (64) est une fente.

4. Débitmètre d'air selon la revendication 3, caractérisé en ce que le corps constituant le passage principal (16) est constitué par au moins deux éléments (10, 12), dont l'un (10) contient en lui une partie du passage principal (16) et la partie rectiligne du passage de dérivation (18) et dont l'autre contient le reste du passage principal (16), au moins l'un (10) desdits deux éléments (10, 12) possédant une gorge disposée sur le pourtour extérieur du passage principal (16) de sorte que, sous l'effet du raccordement des deux éléments, la partie courte du passage de dérivation (18) est formée au niveau de la zone de raccordement des deux éléments.

5. Débitmètre d'air selon la revendication 2, caractérisé en ce que la partie courbe du passage de dérivation (18) est constituée par un conduit (60), dont la sortie (64) est située dans l'élément constituant le passage principal (16).

6. Débitmètre d'air selon la revendication 1, caractérisé en ce que le passage de dérivation (18) est adapté pour recevoir l'air pénétrant dans le filtre à air sous l'effet d'une pression dynamique.

7. Débitmètre d'air selon la revendication 1, caractérisé en ce que le passage de dérivation (18) est adapté pour recevoir l'air pénétrant dans le filtre à air sous l'effet d'une pression statique.

8. Débitmètre d'air selon la revendication 1, caractérisé en ce qu'un élément servant à empêcher la pénétration de la poussière est prévu sur le côte amont de l'ouverture d'entrée du passage de dérivation (18).

9. Débitmètre d'air selon la revendication 2, caractérisé en ce que la longueur de la partie courbe est deux ou plusieurs fois supérieure à celle de la partie rectiligne du passage de dérivation (18) et en ce que le capteur (20) du débit d'air est disposé dans la partie rectiligne.

FIG. 1 PRIOR ART

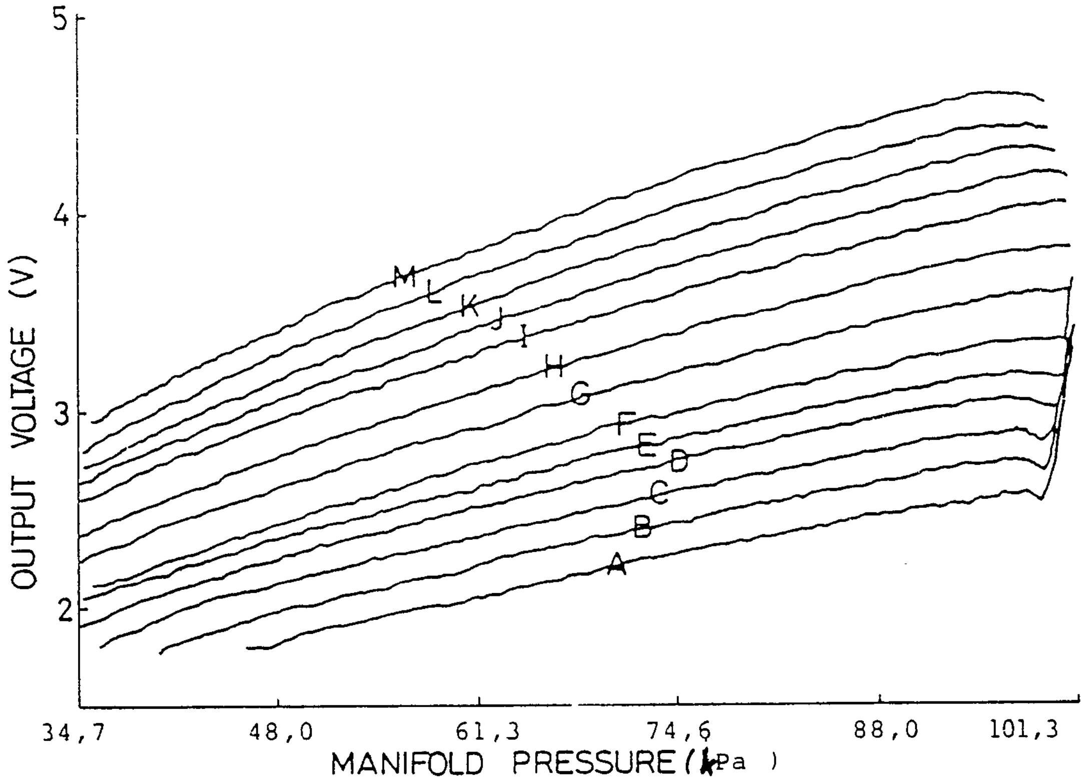


FIG. 2

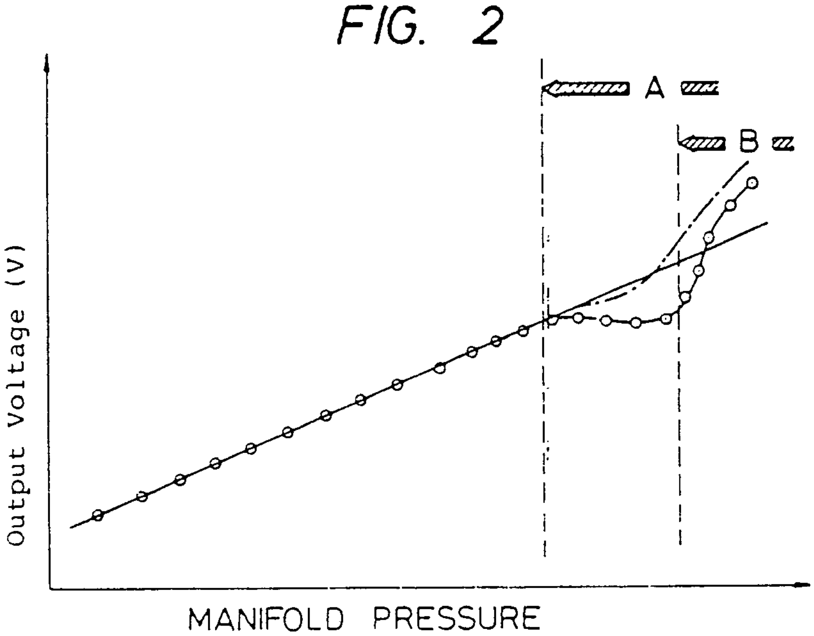

FIG. 3

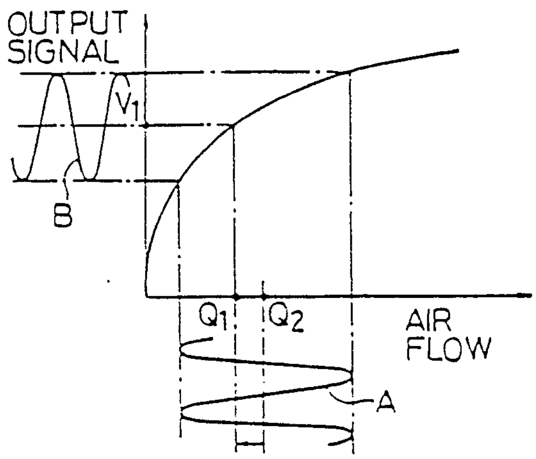


FIG. 4

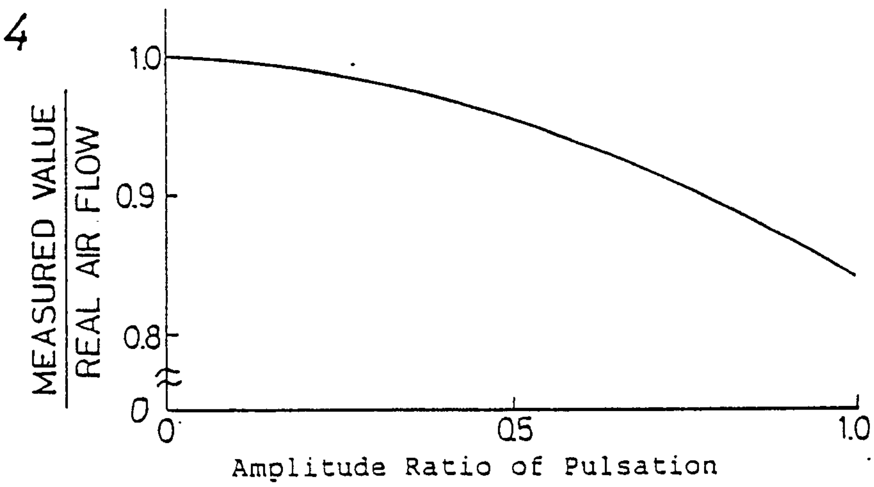


FIG. 5

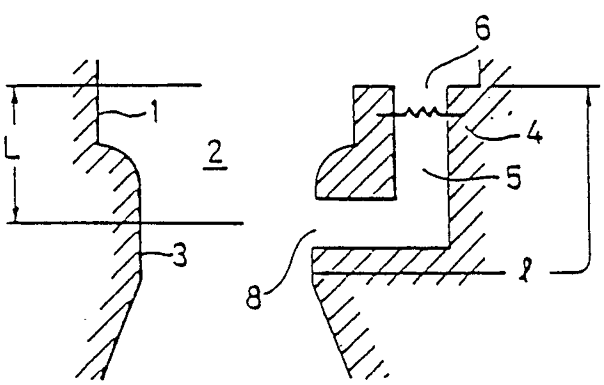

FIG. 6

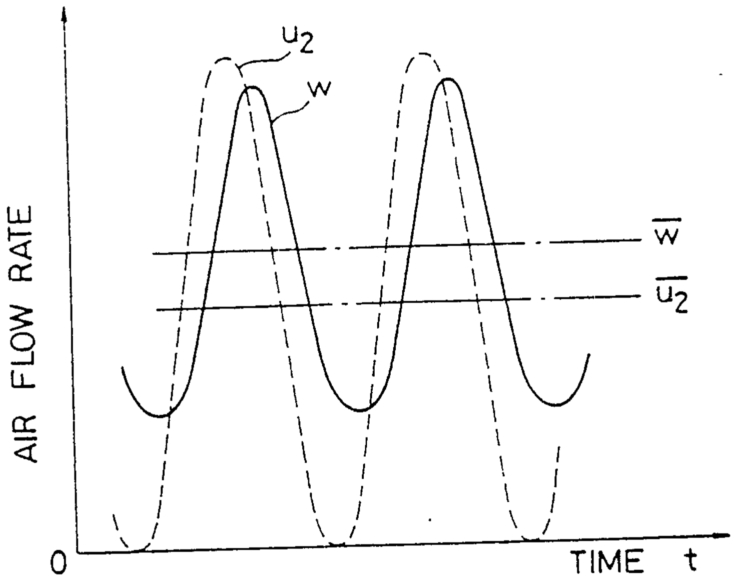
u2
w
AIR FLOW RATE
w̄
ū2
0
TIME t

FIG. 7

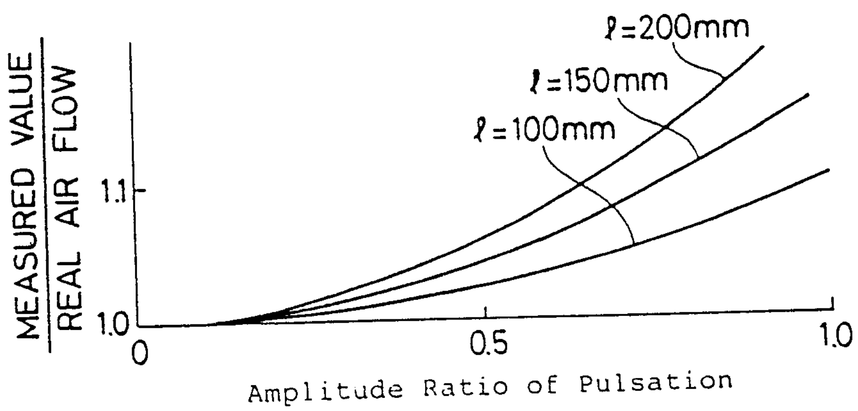
ℓ=200mm
ℓ=150mm
ℓ=100mm
MEASURED VALUE / REAL AIR FLOW
1.1
1.0
0
0.5
1.0
Amplitude Ratio of Pulsation

FIG. 8

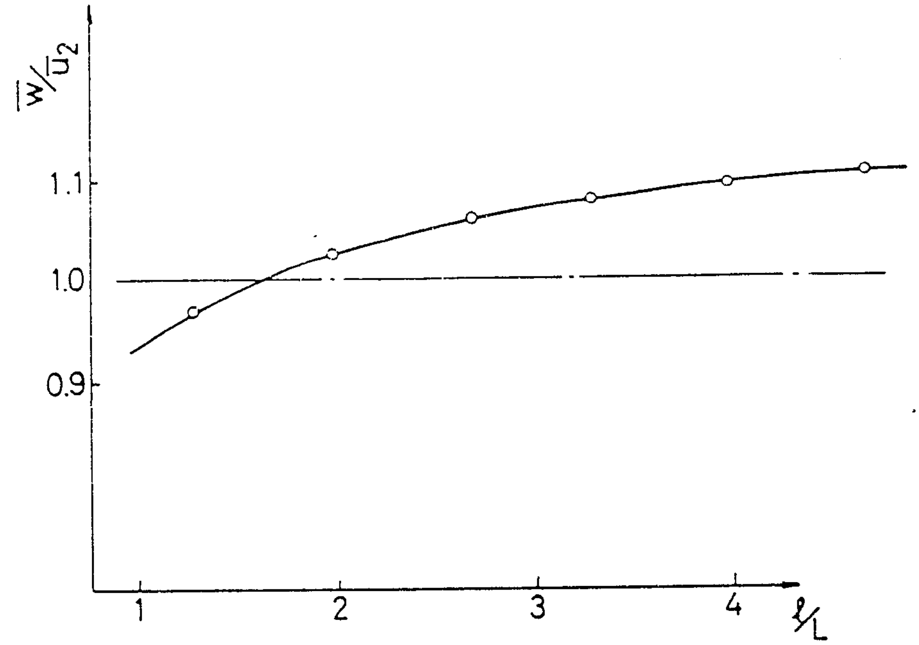


FIG. 9

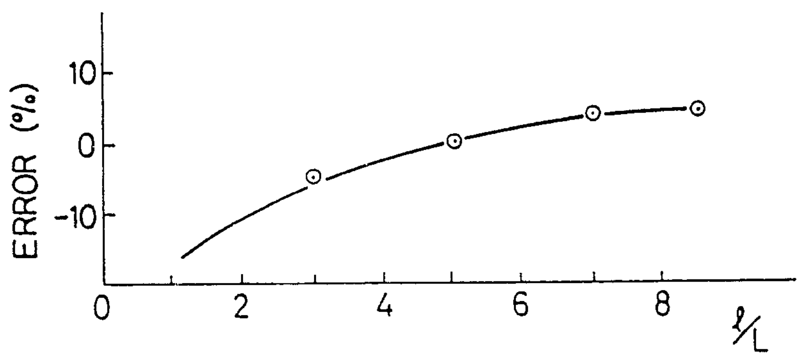

FIG. 10

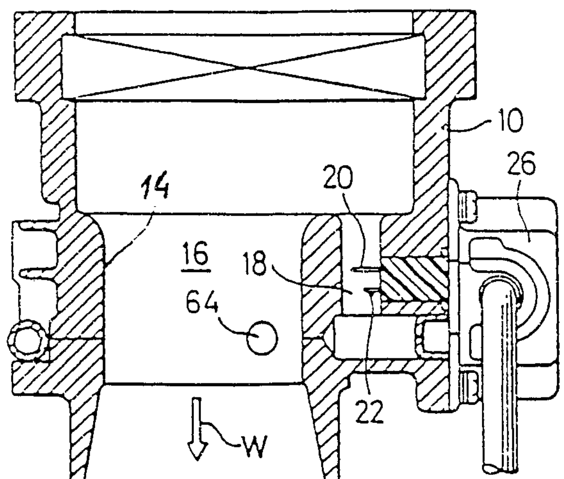


FIG. 11

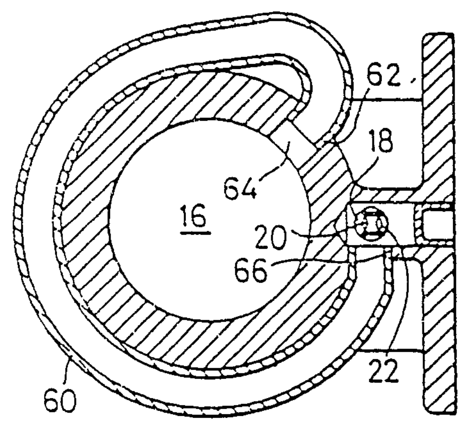


FIG. 12

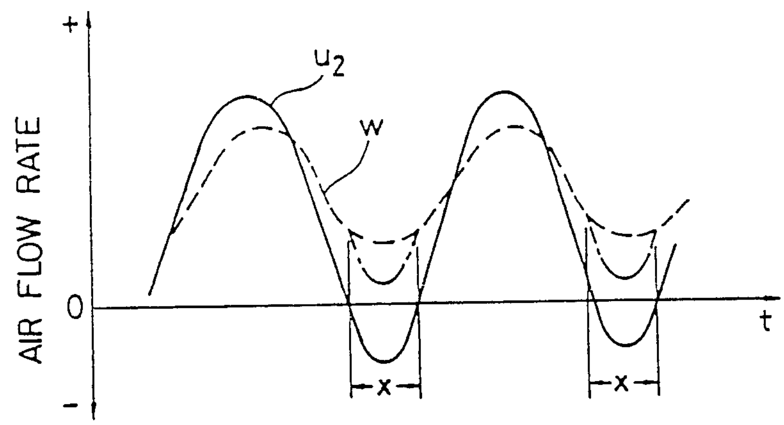


FIG. 13

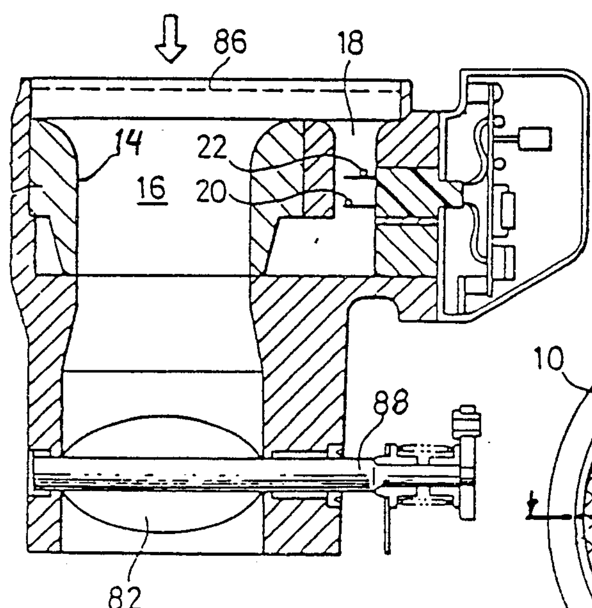


FIG. 14